# FASCICULE DE BREVET EUROPEEN

(11) **EP 2 069 583 B1**
(45) Date de publication et mention de la délivrance du brevet: **19.11.2014**
(21) Numéro de dépôt: 07803572.2
(22) Date de dépôt: 20.09.2007
(51) Int. Cl.: E04G 21/20, E04B 2/10, E04B 2/20, E04B 2/02, E04G 21/16, B65G 7/12

(54) **Ensemble d'un élément de construction et d'un outil de maçonnerie**
Aus einem Bauelement und einem Maurerwerkzeug bestehende Anordnung
Assembly composed of a construction element and a masonry tool

(30) Priorité: 22.09.2006 EP 06121158
(43) Date de publication de la demande: 17.06.2009
(73) Titulaire: Di Trapani, Agostino, 7100 La Louvière (BE)
(72) Inventeur: Di Trapani, Agostino, 7100 La Louvière (BE)
(74) Mandataire: Quintelier, Claude
(86) Numéro de dépôt international: PCT/EP2007/060008
(87) Numéro de publication internationale: WO 2008/034888

(56) Documents cités:
- WO-A-2004/007860
- FR-A- 2 559 189
- FR-A- 2 588 900
- US-A- 3 129 029

## Description

La présente invention se rapporte à un ensemble d'un élément de construction et d'un outil de maçonnerie, lequel élément de construction ayant une longueur l, une largeur d et une hauteur h, lequel élément de construction comportant :
a) une première face et une deuxième face sensiblement orientées dans des plans parallèles aux axes de la longueur l et de la largeur d, et séparées l'une de l'autre par une hauteur h, ladite première face comportant au moins deux nervures orientées sensiblement parallèlement à l'axe de la longueur l, et séparées l'une de l'autre dans l'axe de la largeur d par un premier creux; et
b) une troisième face et une quatrième face, sensiblement orientées dans des plans parallèles aux axes de la largeur d et de la hauteur h, et séparées d'une longueur l.

Un tel élément de construction faisant partie d'un tel ensemble est connu de la demande de brevet français FR 2588900. Les éléments de construction connus comportent des nervures longitudinales sur leur face supérieure. Dans ce document, les nervures servent d'appui à d'autres éléments de construction semblables lorsque ceux-ci sont superposés, afin d'équilibrer les éléments de construction entre eux, et d'éviter le tassement des joints entre les éléments de construction pendant que le mortier est encore fluide. Pour les éléments connus les nervures d'un élément de construction entrent directement en contact avec l'élément de construction qui y est superposé, il devient donc impossible pour le maçon de régler correctement l'alignement en hauteur et en aplomb des éléments de construction d'une rangée. Cet alignement doit en effet se faire en tenant compte des tolérances dimensionnelles de fabrication des éléments de construction.

Conventionnellement, des éléments de construction, en général dans la forme de briques, blocs ou parpaings, sont superposés pour former un mur. Entre deux éléments de construction superposés on applique une couche de mortier pour lier les éléments de construction entre eux et ainsi former le mur. Le mortier utilisé est généralement composé de ciment, de sable et d'eau. Le joint de mortier participe à l'obtention d'un aspect esthétique du mur devenu conventionnel.

Un inconvénient de ce procédé est que la couche de mortier posée entre deux éléments superposés est relativement fluide lorsqu'elle est posée, ce qui altère la stabilité du mur en construction. Ce n'est que lorsque le mortier devient dur et cohésif qu'il remplit pleinement la fonction de lier les éléments de construction entre eux. Toutefois, le mortier peut prendre particulièrement longtemps à durcir entre des éléments de construction très peu absorbants en eau, tels que ceux à base de béton comprimé, dû à leur haute densité de matière supérieure à 2000 kg/m³. Le temps que le mortier met à durcir et le poids élevé des éléments de construction ralentissent la cadence à laquelle un maçon peut construire un mur. De plus, lors de la construction du mur, le mortier situé entre les rangées inférieures des éléments de construction va porter le poids des rangées supérieures. Si le maçon empile trop vite les éléments de construction en hauteur, le poids des rangées supérieures devient trop élevé, il appliquera une trop forte pression sur le mortier des rangées inférieures, qui, n'ayant pas encore durci suffisamment, sera chassé de l'espace entre les rangées inférieures des éléments de construction déjà posées. Le mur va donc se tasser et risque même de flamber. Le manque de stabilité du mur en cours de maçonnerie va ainsi contraindre le maçon à devoir interrompre son travail afin de permettre au mortier de durcir d'abord.

La présente invention a pour objet de réaliser un ensemble d'un élément de construction et d'un outil de maçonnerie qui permettent au maçon de monter plus rapidement en hauteur en améliorant la stabilité du mur en construction tout en lui permettant un réglage adéquat des éléments de construction en alignement et en aplomb.

A cette fin un ensemble suivant l'invention est caractérisé en ce que ledit premier creux est ouvert au moins sur ladite troisième face et en ce que ledit outil de maçonnerie comporte au moins deux profilés dimensionnés de telle façon à pouvoir être placés chacun à cheval sur une des nervures et agencés chacun pour pouvoir coulisser sur ladite nervure sur laquelle il est placé Par l'utilisation des profilés qui sont placés à cheval sur les nervures, il est possible de bien doser le mortier dans le premier creux. En effet, le volume délimité par les profilés et le creux permet de correctement doser le mortier. Le mortier ainsi dosé, après retrait des profilés, on pourra poser un élément de construction sur un autre et le mortier sera chassé entre la nervure et l'élément de construction superposé et y formera une fine couche de mortier. Une fine couche de mortier sèche plus vite et permet ainsi de monter plus rapidement en hauteur.

Il est à noter que le brevet britannique GB 507,594 propose un élément de construction avec des aires périphériques rehaussées de près de 9 mm (3/8 de pouce) sur les faces supérieure et inférieure de l'élément de construction, ainsi qu'une méthode de construction où chaque bloc n'entre pas directement en contact avec le bloc supérieur mais reste séparé au niveau de ces aires périphériques par une fine couche de mortier. Ceci permet donc le réglage de l'épaisseur du joint et donc de l'alignement des éléments de construction. Toutefois, cet élément de construction a une forme trop étriquée pour permettre une fabrication facile. En particulier, pour le produire par moulage il serait nécessaire d'employer un moule complexe et donc cher, et l'opération de démoulage serait lente et compliquée.

La demande de brevet WO 2004/007860 propose des éléments de construction avec des nervures sur leur face inférieure et des rainures sur leur face supérieure, les nervures étant destinées à venir s'emboîter dans les rainures d'un autre élément de construction. Évidemment, une telle configuration limite le réglage de l'alignement latéral des éléments de construction puisque la largeur des rainures restreint le mouvement dans l'axe de la largeur d des nervures qui y sont emboîtées.

Une première forme de réalisation préférentielle d'un ensemble suivant l'invention est caractérisée en ce que lesdits profilés ont une hauteur hₚ et les nervures ont une hauteur hₙᵢ la hauteur hₙᵢ desdites nervures étant inférieure à la hauteur des profilés. Cette différence en hauteur permet un dosage tout à fait approprié du mortier.

Une deuxième forme de réalisation préférentielle d'un ensemble suivant l'invention est caractérisée en ce que lesdits profilés sont munis de bavettes s'étendant vers l'extérieur de l'élément de construction lorsqu'ils sont posés sur les nervures et, agencées pour recevoir un surplus de mortier lors d'un arasement du mortier. Ceci permet d'éviter que le surplus de mortier arasé tombe sur au moins une face visible du mur en construction.

De préférence chacun desdits deux profilés est muni d'au moins un ergot pour déplacer lesdits deux profilés dans l'axe de la longueur l de l'élément de construction, en particulier à l'aide d'une truelle. Ceci permet de facilement déplacer lesdits deux profilés sans déformer sensiblement la masse de mortier fraîchement arasée.

De préférence dans l'élément de construction selon l'invention chaque nervure a une hauteur hₙᵢ située entre 5 et 17 mm, préférablement entre 6 et 8 mm, mesurée par rapport au fond dudit premier creux et en ce que ledit premier creux est ouvert au moins sur ladite troisième face. Cette hauteur hₙᵢ des nervures est choisie pour qu'elle soit toujours inférieure à l'épaisseur du joint, de façon a ce que, dans un mur, une mince couche de mortier puisse rester entre chaque nervure et l'élément de construction qui lui est superposé, permettant l'ajustement de chaque élément de construction en alignement et en aplomb. Le fait que ledit premier creux soit ouvert au moins sur ladite troisième face permet de mouler ledit élément de construction dans un moule simple et de l'extraire dans un mouvement suivant un axe sensiblement longitudinal vers la quatrième face.

Préférablement, ladite deuxième face comporte au moins deux protubérances séparées par un deuxième creux, dont chacune est disposée de façon à être opposée dans une direction parallèle à l'axe de la hauteur h à chaque fois à une des deux nervures. Cette configuration a l'avantage que ledit deuxième creux peut recevoir une partie du mortier du joint pendant la construction du mur, ce qui fera que le mortier opposera une résistance au cisaillement, et non seulement d'adhésion, aux forces latérales exercées sur le mur.

Préférablement, ledit deuxième creux a une largeur d_{c} entre 25 et 300 mm et/ou une profondeur maximale h_{c} entre 3 et 15 mm, ces dimensions étant particulièrement avantageuses pour incrémenter la résistance aux forces latérales d'un mur construit avec de tels éléments de construction.

Alternativement, ladite deuxième face comporte une surface sensiblement continue opposée dans l'axe de la hauteur h et enjambant les deux nervures. Un tel élément de construction peut être produit plus simplement qu'un élément de construction comportant ledit deuxième creux. Notamment quand cet élément de construction est produit par moulage, il pourra être produit avec un moule plus simple et donc moins coûteux.

Préférablement, ledit élément de construction comporte aussi une cinquième face et une sixième face, sensiblement orientées dans des plans parallèles aux axes de la hauteur h et la longueur l, et séparées l'une de l'autre par une largeur d, au moins une desdites nervures étant décalée par rapport à la cinquième ou sixième face par une distance dⱼ, de préférence entre 10 et 15 mm, dans l'axe de la largeur d. Ceci a l'avantage de former un faux joint horizontal apparent sur au moins une face visible du mur qui peut être rempli après la construction du mur avec un mortier de jointoiement sélectionné par exemple pour son aspect esthétique.

Avantageusement, une surface d'égouttage orientée sensiblement parallèlement à l'axe de la longueur l s'étend entre ladite au moins une desdites nervures et ladite cinquième ou sixième face, cette surface d'égouttage formant préférablement un angle α entre 5° et 15° avec l'axe de la largeur d. Cette surface d'égouttage permet de recevoir le surplus de mortier débordant de ladite nervure et d'éviter qu'il retombe sur au moins une face visible du mur.

Préférablement, ladite troisième face comporte au moins un troisième creux, ce qui permet d'alléger l'élément de construction. Ledit au moins un troisième creux peut éventuellement être traversant jusqu'à la quatrième face.

L'invention se rapporte aussi à un procédé de construction d'un mur comportant une pluralité d'éléments de construction faisant partie d'un ensemble selon l'invention, suivant lequel on superpose un desdits éléments de construction et un autre desdits éléments de construction de façon à opposer au moins partiellement la deuxième face de l'un élément de construction à la première face de l'autre élément de construction après avoir appliqué une masse de mortier entre le premier creux dudit autre élément de construction et la deuxième face dudit un élément de construction, afin d'obtenir un joint de mortier entre ledit premier creux de l'autre élément de construction et ladite deuxième face de l'un élément de construction, caractérisé en ce que préalablement à l'application du mortier, on place chaque fois un desdits profilés sur chacune des nervures, ladite masse de mortier est dosée en remplissant un espace entre les profilés avec le mortier et arasant ce mortier avec une truelle prenant appui sur lesdits profilés.

Préférablement, une poignée-massette est utilisée pour prendre au moins l'un élément de construction avant de le poser sur l'autre élément de construction, ladite poignée-massette comportant une première partie qui est au moins partiellement introduite dans le troisième creux de l'un élément de construction pour le soutenir. Ceci permet de manier des éléments de construction lourds avec aisance.

L'invention se rapporte aussi à un mur construit suivant ce procédé de construction.

Des détails concernant l'invention sont décrits ci-après de manière purement illustrative et non limitative en faisant référence aux dessins.
La figure 1 représente une vue en perspective d'un élément de construction selon un premier mode de réalisation;
la figure 2 représente une vue en perspective d'un élément de construction selon un deuxième mode de réalisation;
la figure 3 représente une vue en perspective d'un élément de construction selon un troisième mode de réalisation;
la figure 4 représente une coupe transversale de deux éléments de construction et une masse de mortier dans un procédé de construction d'un mur;
les figures 5a à 5c représentent le procédé de production d'un élément de construction;
la figure 6 représente une vue en perspective d'une rangée d'éléments de construction, une masse de mortier arasée et deux profilés dans un procédé de construction d'un mur;
la figure 7 représente une poignée-massette pour la préhension, le transport, la dépose et le réglage d'éléments de construction, et
les figures 8a et b montrent une autre forme de réalisation d'un élément suivant l'invention.

Dans les dessins une même référence a été attribuée à un même élément ou à un élément analogue.

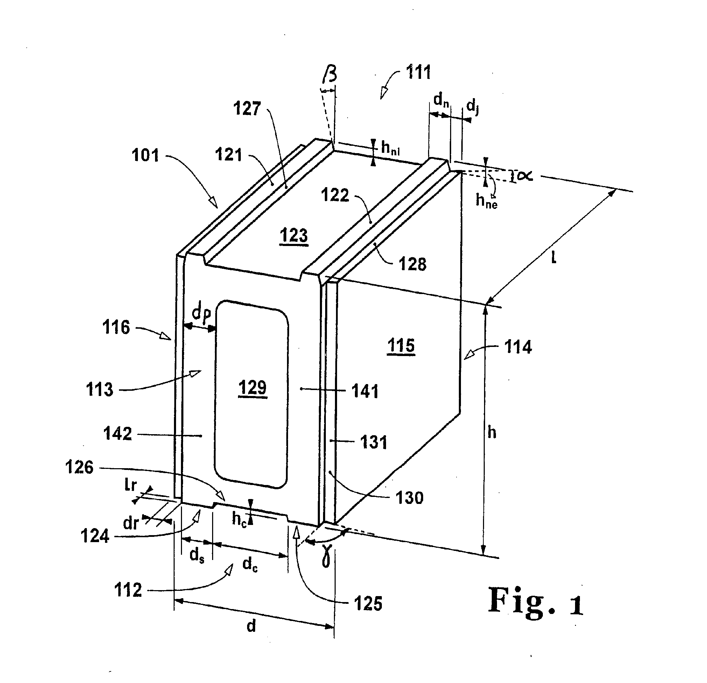

La figure 1 illustre un exemple d'un élément de construction faisant partie d'un ensemble selon l'invention. Cet élément de construction 101 est de préférence fabriqué en béton. Toutefois, l'invention n'est pas limitée à ce type de matériau et l'élément de construction 101 peut être fabriqué en toute autre matière généralement utilisée pour la construction comme par exemple de la terre cuite, du bois, etc.... Cet élément de construction 101 a une forme généralement parallélépipédique avec une longueur l, une largeur d et une hauteur h ayant des axes sensiblement perpendiculaires. L'élément de construction 101 comporte une première face 111 et une deuxième face 112 sensiblement orientées dans des plans parallèles aux axes de la longueur l et la largeur d, et écartées par une hauteur h. Dans l'exemple illustré, la première face 111 est une face supérieure et la deuxième face 112 est une face inférieure, mais elles peuvent aussi être inversées. En outre, l'élément de construction 101 comporte aussi une troisième face 113 et une quatrième face 114, sensiblement orientées dans des plans parallèles aux axes de la largeur d et la hauteur h, et écartées par une longueur l et une cinquième face 115 et une sixième face 116, sensiblement orientées dans des plans parallèles aux axes de la hauteur h et la longueur l, et écartées par une largeur d.

Sur sa première face 111, l'élément de construction 101 comporte deux nervures 121,122 orientées sensiblement parallèlement à l'axe de la longueur l, et écartées dans l'axe de la largeur d par un premier creux 123. Dans l'exemple illustré, chaque nervure 121 ou 122 a une hauteur hₙᵢ entre 6 et 8 mm relativement au fond dudit premier creux 123, quoique dans d'autres modes de réalisation cette hauteur hₙᵢ pourrait être entre 5 et 17 mm. Chacune des nervures 121,122 a aussi une largeur dₙ, préférablement entre 10 et 20 mm, les largeurs dₙ des deux nervures 121,122 étant préférablement sensiblement égales. Cette largeur permet de contrôler le tassement du mortier en état fluide en opposant une résistance à l'écoulement dépendant de la longueur du canal formé entre chaque nervure et l'élément de construction opposé.

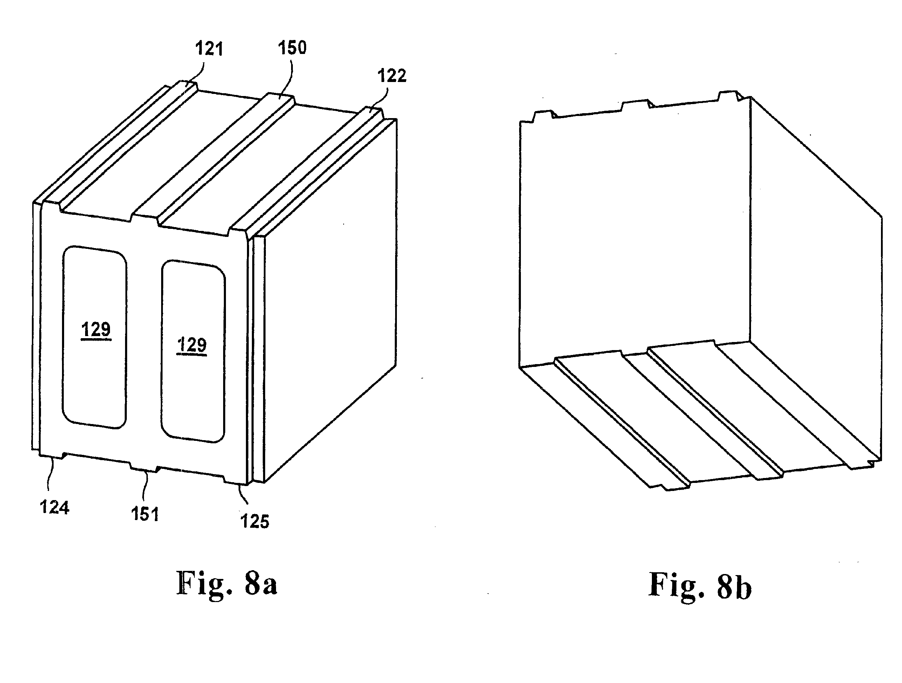

Dans la forme de réalisation illustrée aux figures 8a+b l'élément de construction comprend trois nervures 121, 122 et 150. En général l'élément de construction suivant l'invention comprend donc au moins deux nervures.

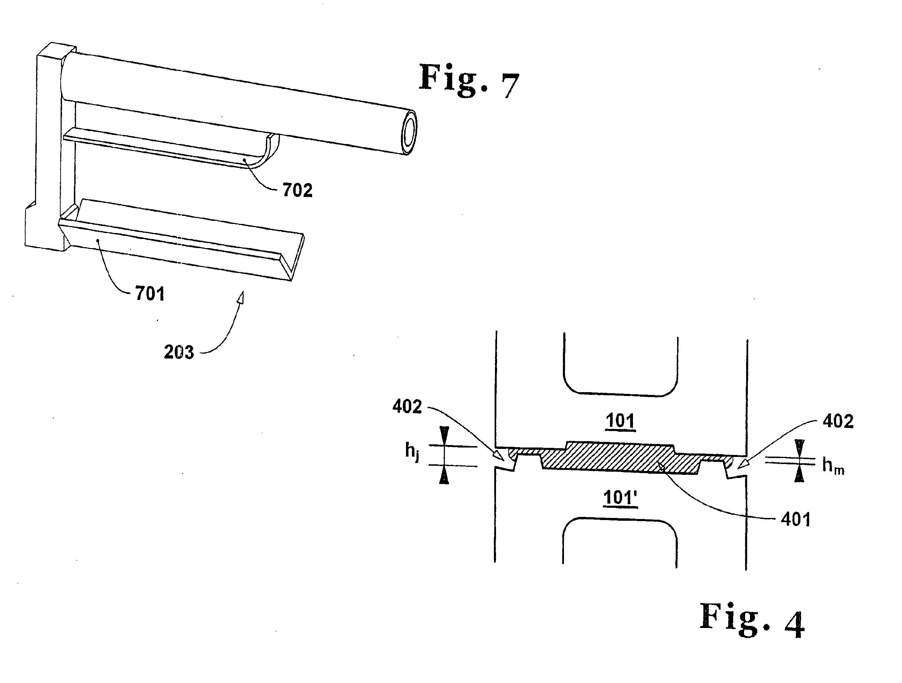

Se référant maintenant à la figure 4, l'objet de ces nervures dans un procédé de construction d'un mur selon l'invention est le suivant :
Lors de la construction d'un mur à l'aide de tels éléments de construction 101,101' pourvus de nervures le maçon va appliquer une masse de mortier 401 sur la première face 111 d'un élément de construction 101', où sont situées les nervures 121,122 (et 150). Appliquer la masse de mortier 401 sur cette première face 111 est avantageux, car la présence de ces nervures permet de mieux positionner le mortier. Les nervures vont ainsi être de part et d'autre de la masse de mortier 401 qui forme un joint de mortier entre les éléments de construction 101,101'. Ce joint possède, dans cet exemple particulier avec des nervures d'une hauteur hₙᵢ de 6 à 8 mm, une épaisseur finale supérieure à 7 mm. Plus généralement l'épaisseur finale devra être au moins 6 mm. Après avoir appliqué le mortier sur l'élément de construction 101', le maçon va positionner l'élément de construction 101 au-dessus de l'élément de construction 101' et les nervures seront alors au moins partiellement noyées dans le mortier après la pose de l'élément de construction 101, comme l'illustre la figure 4. Toutefois, l'épaisseur hⱼ du joint entre la deuxième face 112 de l'élément de construction 101 et le fond du creux 123 dans la première face 111 de l'élément de construction 101' est supérieure à la hauteur hₙᵢ des nervures, laissant donc une fine couche de mortier d'une épaisseur hₘ= hⱼ - hₙᵢ entre les nervures de l'élément de construction 101' et la deuxième face 112 de l'élément de construction 101. Cette épaisseur hₘ sera variable en fonction des tolérances de fabrication. En tout état de cause la hauteur du joint sera toujours supérieure à la hauteur de la nervure + les tolérances dimensionnelles de fabrication de l'élément de construction. De préférence, cette épaisseur hₘ est située dans une plage située entre 1 et 4 mm, et restera généralement inférieure à la hauteur hₙᵢ des nervures 121,122. Ceci permet un réglage de l'alignement et de l'aplomb des éléments de construction 101,101' dans le mur. La hauteur hₙᵢ des nervures 121,122 sera donc fonction de l'épaisseur hⱼ de joint désirée et toujours inférieure à celle-ci. Comme illustré à la figure 4, après la pose de l'élément supérieur, le mortier est chassé vers la partie supérieure des nervures dudit autre élément de construction et vers la partie inférieure des protubérances dudit un élément de construction pour y former une fine couche.

L'espace entre les nervures de l'élément de construction 101' et la deuxième face 112 de l'élément de construction 101 opposé est complètement ou partiellement rempli de mortier. Lors de la pose par le maçon, le poids de l'élément de construction 101 va faire de sorte que cet élément va écraser le mortier. Les nervures, qui par leurs dimensions et structures plus rigides que celles du mortier à l'état pâteux, coopère majoritairement, par rapport au mortier à l'état pâteux, au transfert de la charge de l'un élément de construction 101 vers l'autre élément de construction 101'. Ces nervures vont au moins partiellement se noyer dans le mortier ne laissant qu'une faible épaisseur hₘ de mortier entre la deuxième face 112 de l'un élément de construction 101 et les nervures de l'autre élément de construction 101'. Lorsque le maçon va taper avec sa truelle, ou avec la poignée-massette comme décrit ci-dessous, sur l'élément de construction après l'avoir posé, afin d'ajuster son alignement et son aplomb, le mortier sera chassé dans des espaces situés entre les éléments de construction 101,101'.

Puisque l'épaisseur hₘ de la couche de mortier entre la deuxième face 112 de l'élément de construction 101 et les nervures 121,122 (et 150) de l'autre élément de construction 101' est faible, cette épaisseur hₘ de mortier va durcir plus vite, permettant ainsi au mur en construction de se stabiliser plus rapidement et donc au maçon de monter rapidement en hauteur lors de la construction du mur. Le fait de limiter l'épaisseur du mortier n'altère pas les possibilités de réglage, car cette épaisseur hₘ est choisie telle qu'elle permet de rattraper la tolérance de fabrication des éléments de construction 101,101'.

Il faut également noter que la stabilité d'un mur qui vient tout juste d'être construit dépend de l'épaisseur de la couche de mortier entre les rangées d'éléments de construction 101,101', de la fluidité du mortier, du poids des éléments de construction 101,101' et de leur surface de pose. Puisque les nervures coopèrent majoritairement au transfert de la charge par rapport au mortier à l'état pâteux, et que hₘ < hⱼ réduit la possibilité d'expulsion du mortier vers l'extérieur du mur, ces deux caractéristiques contribuent ensemble à améliorer la stabilité du mur en construction. De plus, comme les nervures sont fabriquées dans la matière de l'élément de construction 101,101', elle possède une structure plus rigide que celle du mortier à l'état pâteux, ce qui favorise la rigidité du mur en construction.

Dans le mode de réalisation illustré dans la figure 1, la deuxième face 112 de l'élément de construction 101 comporte un deuxième creux 126 ayant la forme d'une cannelure avec une largeur d_{c} entre 25 et 300 mm et une profondeur maximale h_{c} entre 3 et 15 mm. Il est à noter que les nervures 121,122 ne sont pas destinées à entrer dans le deuxième creux 126, puisque ce dernier est décalé par rapport aux nervures 121,122. Lors de la pose de l'un élément de construction 101 sur la masse de mortier 401 et l'autre élément de construction 101' ce deuxième creux 126 va aussi être complètement ou partiellement rempli de mortier. De cette façon, quand le mortier aura durci, il présentera une résistance au cisaillement aux forces latérales auxquelles sera soumis le mur.

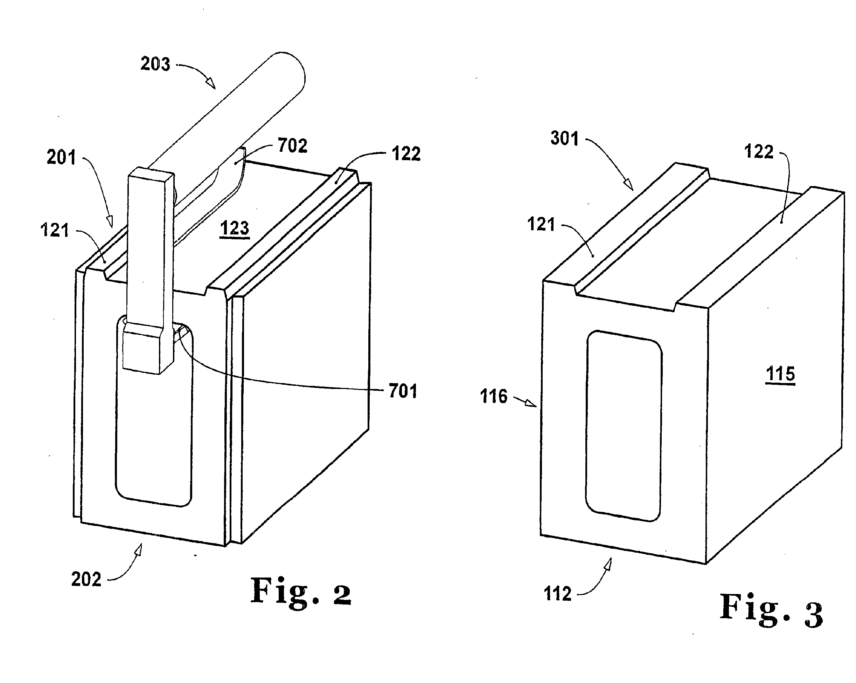

Il est toutefois possible de se passer de ce deuxième creux 126, comme dans le mode de réalisation illustré dans la figure 2, simplifiant la production de l'élément de construction 201. Dans ce mode de réalisation alternatif, le mortier n'opposera toutefois qu'une résistance d'adhésion aux forces latérales entre des éléments de construction 201.

Dans le mode de réalisation illustré dans la figure 1, chaque nervure 122,121 est décalée respectivement de la cinquième face 115 et de la sixième face 116, de préférence par une distance dⱼ entre 10 et 15 mm dans l'axe de la largeur d, une surface d'égouttage 128 orientée sensiblement parallèlement à l'axe de la longueur l joignant chacune desdites nervures 122,121 et respectivement ladite cinquième ou sixième face 115,116. Cette surface d'égouttage 128 formant préférablement un angle α entre 5° et 15° avec l'axe de la largeur d. Cet angle α sert notamment à diriger de l'eau qui tomberait le long de la panneresse de l'élément de construction 101 vers un fond du faux joint 402 entre deux éléments de construction 101,101' et d'éviter ainsi que cette eau emporte du mortier frais qui viendrait alors s'étaler sur au moins une face visible du mur en construction.

La hauteur hₙₑ de chacune des nervures 121,122 par rapport aux arêtes formées par les surfaces d'égouttage 128 et, respectivement, les sixième et cinquième faces 116,115, ensemble avec l'épaisseur de mortier hm, définira l'épaisseur apparente du faux joint 402. Dans cet exemple, chacune des nervures 121,122 a une hauteur hₙₑ de préférence située entre 6 et 8 mm par rapport aux arêtes, quoique dans d'autres modes de réalisation cette hauteur minimale hₙₑ pourrait être entre 0 et 17 mm. La hauteur hₙₑ de chacune des nervures 121,122 par rapport à l'arête extérieure peut être différente de la hauteur hₙᵢ de la même nervure 121,122 par rapport au fond du premier creux 123 si, par exemple par des raisons esthétiques, on désire donner au faux joint 402 une épaisseur apparente différente à l'épaisseur de joint hᵢ. Les écarts dⱼ et hauteurs hₙₑ de chacune des nervures 121,122 ne sont pas nécessairement identiques l'une à l'autre.

Cette hauteur hₙₑ additionnée à la faible épaisseur hₘ du mortier forment des faux joints horizontaux 402 sur au moins une face visible du mur permettant une hauteur de jointoiement traditionnelle et donc au mur de garder son aspect esthétique traditionnel, en appliquant un mortier de jointoiement sélectionné notamment pour son aspect esthétique dans le faux joint 402.

Ces faux joints horizontaux 402 peuvent être complémentés par des faux joints verticaux formés par des réservations 130 sur au moins un des bords verticaux (c.à.d., sensiblement parallèles à l'axe de la hauteur h) de chaque élément de construction 101, chacune comportant une surface 131 orientée sensiblement parallèlement à l'axe de la hauteur h dans un angle γ avec l'axe de la longueur l de préférence entre 75° et 85° et formant une arête verticale avec une des cinquième ou sixième faces 115,116, avec une profondeur lᵣ dans l'axe de la longueur l entre ladite troisième face 113 et ladite arête verticale entre 5 et 17 mm, et une largeur dᵣ entre 10 et 15 mm.

Toutefois, s'il n'est pas désiré de créer des faux joints horizontaux 402 sur une ou les deux faces d'un mur, les nervures 122 et/ou 121 peuvent ne pas être décalées des cinquième et/ou sixième faces 115,116, comme dans l'élément de construction 301 du mode de réalisation illustré dans la fig. 3.

Retournant à la fig. 1, pour alléger l'élément de construction 101 celui-ci peut comprendre au moins un troisième creux 129 ouvert au moins sur la troisième face 113 et occupant une partie substantielle du volume de l'élément de construction 101. Ledit troisième creux 129 est séparé de la cinquième face 115 par une première paroi portante 141 et de la sixième face par une deuxième paroi portante 142. Lesdites première et deuxième parois portantes 141,142 sont destinées à transférer les charges entre les première et deuxième faces 111,112 de l'élément de construction 101. Dans le mode de réalisation illustré dans la figure 1, les largeurs dₛ de chacune des protubérances 124,125 de la deuxième face 112 opposées aux nervures 121,122 de la première face sont au moins sensiblement égales aux épaisseurs dp de chacune des parois portantes 142,141, lesquelles sont, à leur tour, sensiblement supérieures aux largeurs dₙ des nervures 121,122, pour avoir un transfert des charges bien continu entre les nervures 121,122 et les protubérances opposées 124,125. Pour cette même raison, dans le mode de réalisation illustré dans la fig. 1, les nervures 121,122 ont une section trapézoïdale, avec deux flancs 127 dont chacun forme un angle β entre 10° et 20° avec l'axe de la hauteur h. Par contre, dans le mode de réalisation illustré dans la figure 3 il peut être préférable d'avoir des nervures 121,122 à flanc extérieur vertical, de façon à obtenir des surfaces sensiblement plates et dans l'alignement des sixième et cinquième faces 116,115.

Dans la forme de réalisation illustrée aux figures 8a+b, l'élément de construction, faisant partie de l'ensemble suivant l'invention, comporte trois protubérances 124, 125 et 151. Le nombre de protubérances étant de préférence égale à celui des nervures. De plus, et toujours suivant cette forme de réalisation, le creux 129 ne doit pas nécessairement s'étendre sur toute la longueur de l'élément de construction et peut être formé par un trou borgne. Bien entendu un tel trou borgne peut aussi être appliqué dans une réalisation avec deux ou davantage de nervures.

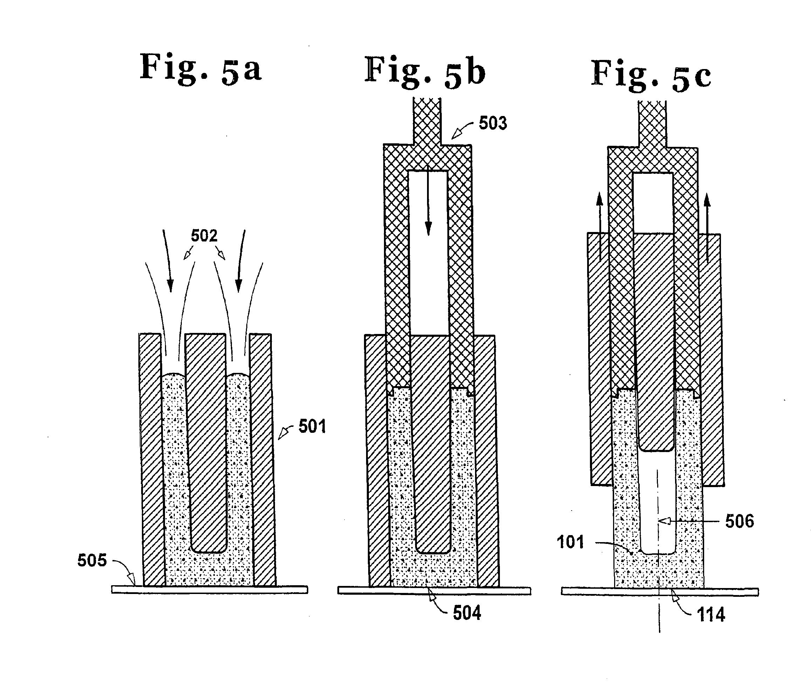

Les figures 5a-5c illustrent un procédé de production par moulage d'un élément de construction 101. Le matériel, préférablement du béton, destiné à former l'élément de construction 101 est d'abord amené par des ouvertures 502 dans un moule 501 fermé à sa base 504 par une plaque de base 505, tel qu'illustré dans la fig. 5a. Il est ensuite comprimé par un pilon 503, comme illustré dans la fig. 5b. Finalement, le moule 501 et la plaque de base 505 se séparent pour que l'élément de construction 101 puisse être extrait du moule 501. Cette extraction peut-être aidée par un mouvement relatif entre le moule 501 et le pilon 503 suivant sensiblement un axe d'extraction 506.

Dû aux tolérances dans le dosage du matériel, les tolérances dimensionnelles de l'élément de construction 101 suivant l'axe d'extraction 506 sont assez larges. Par contre, perpendiculairement à cet axe d'extraction 506 l'élément de construction 101 va épouser très précisément les formes du moule 501, et donc avoir des tolérances dimensionnelles bien plus réduites. Traditionnellement, cet axe d'extraction 506 correspondait à l'axe de la hauteur h des éléments de construction conventionnellement produits par moulage, résultant dans des tolérances de fabrication assez élevées dans l'axe de la hauteur h.

Tandis qu'une hauteur h de l'élément de construction 101 précise est cruciale pour assurer l'alignement aisé des rangées d'éléments de construction 101 et la précision de la largeur d est aussi importante pour assurer que des faces visibles du mur soient bien régulières, la précision dans la longueur l est beaucoup moins cruciale pour la construction du mur. Il est donc bien préférable d'employer un moule 501 dont l'axe d'extraction 506 soit sensiblement aligné avec l'axe de la longueur l de l'élément de construction. Pour pouvoir extraire l'élément de construction 101 du moule 501 sans devoir employer des éléments additionnels et escamotables dans le moule ou sur la plaque de base 505, il faudra que tous les creux de l'élément de construction 101 soient ouverts au moins sur la face de l'élément de construction 101 opposée à la plaque de base 505 quand l'élément de construction 101 est encore dans le moule 501, en l'occurrence la troisième face 113 de l'élément de construction 101.

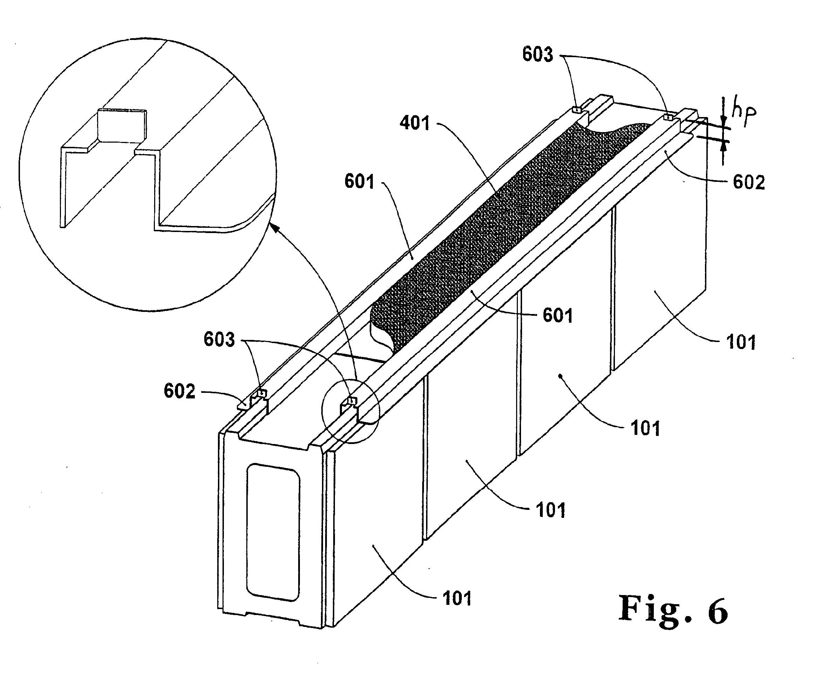

Le dosage de la masse de mortier 401 nécessaire à l'assemblage des éléments de construction 101 peut se faire de manière manuelle par le maçon expérimenté. Toutefois, pour les maçons moins doués ou pour le confort du maçon expérimenté, l'utilisation d'un outil de maçonnerie comportant au moins deux profilés 601 dimensionnés de telle façon à être placés à cheval sur les nervures 121,122 (et 150), comme illustré dans la fig. 6, permettra de doser parfaitement et facilement la quantité de mortier à déposer sur les éléments de construction 101 avant de réaliser l'assemblage de ceux-ci. Le profilé est placé de façon amovible sur chaque nervure lors de la construction du mur, de façon à pouvoir le retirer. La hauteur hₚ de ces profilés sera fonction de la hauteur hⱼ des joints souhaitée entre deux éléments de construction 101,101' superposés. Les nervures servent de guides de retenue et de coulissement aux profilés 601. Les profilés 601 ont une hauteur hₚ et les nervures ont une hauteur hₙᵢ, la hauteur hₙᵢ des nervures étant inférieure à la hauteur des profilés. La hauteur des profilés est toujours supérieure à la hauteur du joint de mortier.

Pour obtenir ce dosage, il suffit de remplir à reflux de mortier l'espace situé entre les deux profilés 601 et d'araser cette masse de mortier 401 avec une truelle, celle-ci prenant appui sur les deux profilés 601 lors de l'arasement.

Chaque profilé 601 est préférablement muni d'une bavette 602 empêchant le surplus de mortier de retomber lors de l'arasement sur les cinquième ou sixième faces 115,116 de l'élément de construction 101 et donc de les salir.

Chaque profilé 601 est préférablement aussi muni d'au moins un ergot 603 permettant de déplacer le profilé 601 à l'aide de la truelle qui, appliquée latéralement sur l'ergot 603, permettra de faire coulisser les profilés 601 dans le sens longitudinal du mur, guidés par les nervures 121,122.

Grâce à une tolérance dimensionnelle de fabrication réduite des éléments de construction et à l'usage des profilés permettant d'une part un dosage précis du mortier et d'autre part de réaliser un lit plan de mortier, on permet au maçon qualifié ou non de construire aisément, rapidement et proprement un mur sans gaspillage de mortier.

L'orientation longitudinale du troisième creux 129 présente aussi des avantages à l'heure de la construction d'un mur avec des éléments de construction suivant cette invention. Grâce à cette forme, il devient possible d'employer un outil tel que la poignée-massette 203, illustrée dans la figure 7. Se référant à la figure 2, on peut voir comment, pour une préhension aisée d'un élément de construction 201, une première partie 701 de la poignée-massette 203 pénètre dans le troisième creux 129 pour soutenir l'élément de construction 201 tandis qu'une deuxième partie 702 sert à protéger la main du maçon et empêche le basculement de l'élément de construction 201 pendant son transport. La poignée-massette 203 peut donc être utilisée pour prendre l'élément de construction 201, le transporter, le déposer et le régler en alignement et aplomb, réduisant le nombre de mouvements nécessaires pour construire un mur. Ce réglage peut par exemple être réalisé en frappant sur l'élément de construction 201 à l'aide de la poignée-massette 203.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que descriptif.

### REFERENCES DES FIGURES

- 101: Élément de construction
- 101': Élément de construction
- 111: Première face
- 112: Deuxième face
- 113: Troisième face
- 114: Quatrième face
- 115: Cinquième face
- 116: Sixième face
- 121: Nervure
- 122: Nervure
- 123: Premier creux
- 124: Surface opposée
- 125: Surface opposée
- 126: Deuxième creux
- 127: Surface oblique
- 128: Surface d'égouttement
- 129: Troisième creux
- 130: Réservation
- 131: Surface oblique
- 150: Nervure
- 151: Protubérance
- 201: Élément de construction
- 202: Surface opposée
- 203: Poignée massette
- 301: Élément de construction
- 401: Masse de mortier
- 402: Faux joint
- 501: Moule
- 502: Ouvertures
- 503: Pilon
- 504: Ouverture d'extraction
- 505: Plaque de base
- 506: Axe d'extraction
- 601: Profilé
- 602: Bavette
- 603: Ergot
- 701: Première partie de la poignée-massette
- 702: Deuxième partie de la poignée-massette

## Revendications

1. Un ensemble comprenant un élément de construction et un outil de maçonnerie, lequel élément de construction (101,101', 201, 301) ayant une longueur l, une largeur d et une hauteur h, lequel élément de construction (101, 101',201, 301) comportant :
a) une première face (111) et une deuxième face (112) sensiblement orientées dans des plans parallèles aux axes de la longueur l et de la largeur d, et séparées l'une de l'autre par une hauteur h, ladite première face (111) comportant au moins deux nervures (121,122) orientées sensiblement parallèlement à l'axe de la longueur l, et séparées chaque fois l'une de l'autre dans l'axe de la largeur d par un premier creux (123); et
b) une troisième face (113) et une quatrième face (114), sensiblement orientées dans des plans parallèles aux axes de la largeur d et de la hauteur h, et séparées d'une longueur l ;
**caractérisé en ce que** que ledit premier creux est ouvert au moins sur ladite troisième face et **en ce que** ledit outil de maçonnerie comporte au moins deux profilés dimensionnés de telle façon à pouvoir être placés chacun à cheval sur une des nervures et agencés chacun pour pouvoir coulisser sur ladite nervure sur laquelle il est placé.

2. Ensemble suivant la revendication 1, **caractérisé en ce que** lesdits profilés (601) ont une hauteur hₚ et les nervures ont une hauteur h_{ni,} la hauteur hₙᵢ desdites nervures (121,122) étant inférieure à la hauteur des profilés.

3. Ensemble suivant la revendication 1 ou 2, **caractérisé en ce que** lesdits profilés sont munis de bavettes (602) s'étendant vers l'extérieur de l'élément de construction (101') lorsqu'ils sont posés sur les nervures et, agencées pour recevoir un surplus de mortier lors d'un arasement du mortier.

4. Ensemble suivant l'une des revendications 1 à 3, **caractérisé en ce que** chacun desdits deux profilés (601) est muni d'au moins un ergot (603) pour déplacer lesdits deux profilés dans l'axe de la longueur l de l'élément de construction, en particulier à l'aide d'une truelle.

5. Ensemble suivant l'une des revendications 1 à 4, **caractérisé en ce que** lesdits profilés sont agencés pour confiner le mortier.

6. Ensemble suivant l'une des revendications 1 à 5, **caractérisé en ce que** ladite deuxième face (112) comporte au moins deux protubérances (124,125) séparées par un deuxième creux (126), chacune de ces protubérances étant disposée de façon à être opposée dans une direction parallèle à l'axe de la hauteur h chaque fois à une des nervures (121,122).

7. Ensemble suivant la revendication 6, **caractérisé en ce que** ledit deuxième creux (126) a une largeur d_{c} entre 25 et 300 mm et/ou une profondeur maximale h_{c} entre 3 et 15 mm.

8. Ensemble suivant l'une des revendications 1 à 5, **caractérisé en ce que** ladite deuxième face (112) comporte une surface (202) sensiblement continue opposée dans l'axe de la hauteur h et enjambant les deux nervures (121,122).

9. Ensemble suivant l'une des revendications 1 à 8, caractérisé en qu'il comporte aussi une cinquième face (115) et une sixième face (116), sensiblement orientées dans des plans parallèles aux axes de la hauteur h et la longueur l, et séparées l'une de l'autre par une largeur d, au moins une desdites nervures (122,121) étant décalée par rapport à la cinquième ou sixième face (115,116) par une distance dⱼ , de préférence entre 10 et 15 mm, dans l'axe de la largeur d.

10. Ensemble suivant la revendication 9, **caractérisé en ce qu'**une surface d'égouttage (128) orientée sensiblement parallèlement à l'axe de la longueur l s'étend entre au moins une desdites nervures (122,121) et ladite cinquième ou sixième face (115, 116), cette surface d'égouttage (128) formant préférablement un angle α entre 5° et 15° avec l'axe de la largeur d.

11. Ensemble suivant la revendication 10, **caractérisé en ce que** la hauteur hₙᵢ de chaque nervure (121,122) est située entre 5 et 17 mm, préférablement entre 6 et 8 mm, mesurée par rapport au fond dudit premier creux (123) et **en ce qu'**au moins une desdites nervures (121,122) a une hauteur minimale hₙₑ entre 0 et 17 mm, préférablement entre 6 et 8 mm relativement à la surface d'égouttage (128).

12. Ensemble suivant l'une des revendications 1 à 11, **caractérisé en ce que** ladite troisième face (113) comporte au moins un troisième creux (129).

13. Un procédé de construction d'un mur comportant une pluralité d'éléments de construction (101,101',201,301) faisant partie d'un ensemble selon l'une des revendications 1 à 12, suivant lequel on superpose un desdits éléments de construction (101) et un autre desdits éléments de construction (101') de façon à opposer au moins partiellement la deuxième face (112) de l'un élément de construction (101) à la première face (111) de l'autre élément de construction (101') après avoir appliqué une masse de mortier (401) entre le premier creux (123) dudit autre élément de construction (101') et la deuxième face (112) dudit un élément de construction (101), afin d'obtenir un joint de mortier entre ledit premier creux (123) de l'autre élément de construction (101') et ladite deuxième face (112) de l'un élément de construction (101), **caractérisé en ce que** préalablement à l'application du mortier on place chaque fois un desdits profilés sur chacune des nervures, ladite masse de mortier (401) est dosée en remplissant un espace entre les profilés (601) avec le mortier et arasant ce mortier avec une truelle prenant appui sur lesdits profilés (601).

14. Le procédé suivant la revendication 13, **caractérisé en ce que** l'épaisseur hⱼ dudit joint de mortier est supérieure à la hauteur hₙᵢ des nervures (121,122) dudit autre élément de construction (101'), la masse de mortier (401) débordant dudit premier creux (123) de l'autre élément de construction (101') pour former une fine couche de mortier entre la deuxième face (112) de l'un élément de construction (101) et lesdites nervures (121,122) de l'autre élément de construction (101') et afin de permettre un réglage de l'alignement et de l'aplomb des éléments de construction (101,101') pendant que le mortier reste fluide tout en équilibrant les éléments de construction et évitant le tassement du joint.

15. Le procédé selon une des revendications 13 ou 14, **caractérisé en ce qu'**une poignée-massette (203) est utilisée pour prendre au moins l'un élément de construction (101) avant de le positionner au-dessus de l'autre élément de construction (101'), ladite poignée-massette (203) comportant une première partie (701) qui est au moins partiellement introduite dans le troisième creux (129) de l'un élément de construction (101) pour le soutenir.

16. Un mur construit suivant le procédé selon une des revendications 13 à 15.

## Patentansprüche

1. Anordnung, umfassend ein Bauelement und ein Maurerwerkzeug, wobei das Bauelement (101, 101', 201, 301) eine Länge I, eine Breite d und eine Höhe h hat, wobei das Bauelement (101, 101', 201, 301) Folgendes umfasst :
a) eine erste Seite (111) und eine zweite Seite (112), die im Wesentlichen in zu den Achsen der Länge l und der Breite d parallelen Ebenen ausgerichtet und voneinander durch eine Höhe h getrennt sind, wobei die erste Seite (111) mindestens zwei Rippen (121, 122) umfasst, die im Wesentlichen parallel zur Achse der Länge I ausgerichtet und jeweils voneinander in der Achse der Breite d durch einen ersten Hohlraum (123) getrennt sind; und
b) eine dritte Fläche (113) und eine vierte Fläche (114), die im Wesentlichen in zu den Achsen der Breite d und der Höhe h parallelen und um eine Länge l getrennten Ebenen ausgerichtet sind;
**dadurch gekennzeichnet, dass** der erste Hohlraum zumindest auf der dritten Seite offen ist, und dass das Maurerwerkzeug mindestens zwei Profile umfasst, die derart dimensioniert sind, dass sie jeweils quer auf einer der Rippen angeordnet werden können, und derart vorgesehen sind, dass sie auf der Rippe, auf der sie angeordnet sind, schieben können.

2. Anordnung nach Anspruch 1, **dadurch gekennzeichnet, dass** die Profile (601) eine Höhe hₚ und die Rippen eine Höhe hₙᵢ haben, wobei die Höhe hₙᵢ der Rippen (121, 122) kleiner als die Höhe der Profile ist.

3. Anordnung nach Anspruch 1 oder 2, **dadurch gekennzeichnet, dass** die Profile mit Spritzklappen (602) versehen sind, die sich nach außen zum Bauelement (101'), wenn sie auf den Rippen angeordnet sind, erstrecken und derart angeordnet sind, dass sie einen Mörtelüberschuss bei einer Mörtelabgleichung aufnehmen.

4. Anordnung nach einem der Ansprüche 1 bis 3, **dadurch gekennzeichnet, dass** jedes der beiden Profile (601) mit mindestens einem Haken (603) versehen ist, um die beiden Profile in der Achse der Länge l des Bauelements, insbesondere mit Hilfe einer Kelle, zu verschieben.

5. Anordnung nach einem der Ansprüche 1 bis 4, **dadurch gekennzeichnet, dass** die Profile derart angeordnet sind, dass sie den Mörtel eingrenzen.

6. Anordnung nach einem der Ansprüche 1 bis 5, **dadurch gekennzeichnet, dass** die zweite Seite (112) mindestens zwei Ausstülpungen (124, 125) umfasst, die durch einen zweiten Hohlraum (126) getrennt sind, wobei jede dieser Ausstülpungen derart angeordnet ist, dass sie in eine Richtung parallel zur Achse der Höhe h jeweils einer der Rippen (121, 122) gegenüberliegen.

7. Anordnung nach Anspruch 6, **dadurch gekennzeichnet, dass** der zweite Hohlraum (126) eine Breite d_{c} zwischen 25 und 300 mm und/oder eine maximale Tiefe h_{c} zwischen 3 und 15 mm hat.

8. Anordnung nach einem der Ansprüche 1 bis 5, **dadurch gekennzeichnet, dass** die zweite Seite (112) eine im Wesentlichen kontinuierliche gegenüberliegende Oberfläche (202) in der Achse der Höhe h umfasst, die die beiden Rippen (121, 122) überspannt.

9. Anordnung nach einem der Ansprüche 1 bis 8, **dadurch gekennzeichnet, dass** sie auch eine fünfte Fläche (115) und eine sechste Fläche (116) umfasst, die im Wesentlichen in Ebenen parallel zu den Achsen der Höhe h und der Länge I ausgerichtet und voneinander durch eine Breite d getrennt sind, wobei mindestens eine der Rippen (122, 121) in Bezug zur fünften oder sechsten Fläche (115, 116) durch einen Abstand dⱼ, vorzugsweise zwischen 10 und 15 mm, in der Achse der Breite d versetzt ist.

10. Anordnung nach Anspruch 9, **dadurch gekennzeichnet, dass** sich eine Abtropffläche (128), die im Wesentlichen parallel zur Achse der Länge l ausgerichtet ist, zwischen mindestens einer der Rippen (122, 121) und der fünften oder sechsten Fläche (115, 116) erstreckt, wobei diese Abtropffläche (128) vorzugsweise einen Winkel α zwischen 5° und 15° mit der Achse der Breite d bildet.

11. Anordnung nach Anspruch 10, **dadurch gekennzeichnet, dass** die Höhe hₙᵢ jeder Rippe (121, 122) zwischen 5 und 17 mm, vorzugsweise zwischen 6 und 8 mm, gemessen zum Boden des ersten Hohlraums (123), angeordnet ist, und dass mindestens eine der Rippen (121, 122) eine Mindesthöhe hₙₑ zwischen 0 und 17 mm, vorzugsweise zwischen 6 und 8 mm in Bezug zur Abtropffläche (128) aufweist.

12. Anordnung nach einem der Ansprüche 1 bis 11, **dadurch gekennzeichnet, dass** die dritte Fläche (113) mindestens einen dritten Hohlraum (129) umfasst.

13. Verfahren zur Errichtung einer Mauer, umfassend eine Vielzahl von Bauelementen (101, 101', 201, 301), die Teil einer Anordnung nach einem der Ansprüche 1 bis 12 sind, bei dem eines der Bauelemente (101) und ein weiteres der Bauelemente (101') derart übereinander angeordnet werden, dass die zweite Fläche (112) eines der Bauelemente (101) zumindest teilweise der ersten Fläche (111) des anderen Bauelements (101') gegenüberliegt, nachdem eine Mörtelmasse (401) zwischen dem ersten Hohlraum (123) des anderen Bauelements (101') und der zweiten Fläche (112) des einen Bauelements (101) angelegt wurde, um eine Mörtelverbindung zwischen dem ersten Hohlraum (123) des anderen Bauelements (101') und der zweiten Fläche (112) des einen Bauelements (101) zu erhalten, **dadurch gekennzeichnet, dass** vor dem Anlegen des Mörtels jeweils eines der Profile auf jeder der Rippen angeordnet wird, dass die Mörtelmasse (401) dosiert wird, wobei ein Raum zwischen den Profilen (601) mit dem Mörtel gefüllt wird, und dieser Mörtel mit einer Kelle, die auf den Profilen (601) abgestützt ist, abgezogen wird.

14. Verfahren nach Anspruch 13, **dadurch gekennzeichnet, dass** die Dicke hⱼ der Mörtelverbindung größer als die Höhe hₙᵢ der Rippen (121, 122) des anderen Bauelements (101') ist, wobei die Mörtelmasse (401) über den ersten Hohlraum (123) des anderen Bauelements (101') hinausgeht, um eine feine Mörtelschicht zwischen der zweiten Fläche (112) des einen Bauelements (101) und den Rippen (121, 122) des anderen Bauelements (101') zu bilden, und um eine Einstellung der Ausrichtung und der Lotrechten der Bauelemente (101, 101') zu ermöglichen, während der Mörtel flüssig bleibt, wobei die Bauelemente ausgeglichen und das Setzen der Verbindung vermieden werden.

15. Verfahren nach einem der Ansprüche 13 oder 14, **dadurch gekennzeichnet, dass** ein Keulengriff (203) verwendet wird, um zumindest das eine Bauelement (101) zu nehmen, bevor es über dem anderen Bauelement (101') angeordnet wird, wobei der Keulengriff (203) einen ersten Teil (701) umfasst, der zumindest teilweise in den dritten Hohlraum (129) des einen Bauelements (101) eingeführt wird, um es zu unterstützen.

16. Mauer, die nach dem Verfahren nach einem der Ansprüche 13 bis 15 errichtet wird.

## Claims

1. A set comprising a construction element and a masonry tool, said construction element (101, 101', 201, 301) having a length l, a width d and height h, which construction element (101, 101', 201, 301) comprising :
a) a first face (111) and a second face (112) substantially oriented in planes parallel to the axes of the length l and width d and separated from each other by a height h, said first face (111) comprising at least two ribs (121, 122) oriented substantially parallel to the axis of the length I, and each time separated from each other in the axis of the width d by a first hollow (123); and
b) a third face (113) and a fourth face (114), substantially oriented in planes parallel to the axes of the width d and the height h and separated by a length l;
**characterized in that** said first hollow is open at least on said third face and **in that** said masonry tool comprises at least two shaped sections sized so as to be able to be placed straddling each time one of the ribs and each arranged so as to be able to slide on said rib on which it is placed.

2. A set according to claim 1, **characterized in that** said shaped sections (601) have a height hₚ and the ribs have a height hₙᵢ, the height hₙᵢ of the said ribs (121, 122) being less than the height of the shaped sections.

3. A set according to claim 1 or 2, **characterized in that** said shaped sections are provided with flaps (602) extending towards the outside of the construction element (101') when they are placed on the ribs, and arranged to receive surplus mortar when the mortar is leveled off.

4. A set according to one of claims 1 to 3, **characterized in that** each of said two shaped sections (601) is provided with at least one lug (603) for moving said two shaped sections in the axis of the length l of the construction element, in particular by means of a trowel.

5. A set according to one of claims 1 to 4, **characterized in that** said shaped sections are arranged to confine the mortar.

6. A set according to one of claims 1 to 5, **characterized in that** said second face (112) comprises at least two protuberances (124, 125) separated by a second hollow (126), each of these protuberances being disposed so as to be opposite in a direction parallel to the axis of the height h each time to one of the ribs (121, 122).

7. A set according to claim 6, **characterized in that** said second hollow (126) has a width d_{c} of between 25 and 300 mm and/or a maximum depth h_{c} of between 3 and 15 mm.

8. A set according to one of the claims 1 to 5, **characterized in that** said second face (112) has a substantially continuous surface (202) opposite in the axis of the height h and straddling the two ribs (121, 122).

9. A set according to one of claims 1 to 8, **characterized in that** it also has a fifth face (115) and a sixth face (116), substantially oriented in planes parallel to the axes of the height h and length I and separated from each other by a width d, at least one of said ribs (122, 121) being offset with respect to the fifth or sixth face (115, 116) by a distance dⱼ, preferably of between 10 and 15 mm, in the axis of the width d.

10. A set according to claim 9, **characterized in that** a drainage surface (128) oriented substantially parallel to the axis of the length l extends between at least one of said ribs (122, 121) and said fifth or sixth face (115, 116), this drainage surface (128) preferably forming an angle α of between 5° and 15° with the axis of the width d.

11. A set according to claim 10, **characterized in that** the height hₙᵢ of each rib (121, 122) is situated between 5 and 15 mm, preferably between 6 and 8 mm, measured with respect to the bottom of said first hollow (123), and **in that** at least one of said ribs (121, 122) has a minimum height hₙₑ of between 0 and 17 mm, preferably between 6 and 8 mm, relative to the drainage surface (128).

12. A set according to one of claims 1 to 11, **characterized in that** said third face (113) comprises at least a third hollow (129).

13. A method of constructing a wall comprising a plurality of construction elements (101, 101', 201, 301) forming part of a set according to one of claims 1 to 12, according to which one of said construction elements (101) and another one of said construction elements (101') are superimposed so as to at least partially oppose the second face (112) of one construction element (101) to the first face (111) of the other construction element (101') after having applied a mortar mass (401) between the first hollow (123) in said other construction element (101') and the second face (112) of said one construction element (101), in order to obtain a mortar joint between said first hollow (123) in the other construction element (101') and said second face (112) of the one construction element (101), **characterized in that**, prior to the application of the mortar, one of said profiled sections is each time placed on each of the ribs, said mortar mass (401) is apportioned by filling a space between the profiled sections (601) with the mortar and leveling off this mortar with a trowel bearing on said sections (601).

14. The method according to claim 13, **characterized in that** the thickness hⱼ of said mortar joint is greater than the height hₙᵢ of the ribs (121, 122) on said other construction element (101'), the mortar mass (401) overflowing from said first hollow (123) in the other construction element (101') in order to form a fine layer of mortar between the second face (112) of one construction element (101) and said ribs (121, 122) on the other construction element (101') and so as to allow adjustment of the alignment and perpendicularity of the construction elements (101, 101') while the mortar remains fluid while balancing the construction elements and preventing settling of the joint.

15. The method according to one of claims 13 or 14, **characterized in that** a handle/mallet (203) is used to take at least the one construction element (101) before positioning it above the other construction element (101'), said handle/mallet (203) having a first part (701) that is at least partially introduced into the third hollow (129) in the one construction element (101) in order to support it.

16. A wall constructed according to the method according to one of claims 13 to 15.
